(19) Europäisches Patentamt
European Patent Office
Office européen des brevets

(11) **EP 3 140 328 B2**

(12) **NEW EUROPEAN PATENT SPECIFICATION**
After opposition procedure

(45) Date of publication and mention
of the opposition decision:
**29.04.2026 Bulletin 2026/18**

(45) Mention of the grant of the patent:
**18.11.2020 Bulletin 2020/47**

(21) Application number: **15719487.9**

(22) Date of filing: **06.05.2015**

(51) International Patent Classification (IPC):
**C08F 110/06** (2006.01)  **C08F 210/06** (2006.01)
**C08F 4/657** (2006.01)

(52) Cooperative Patent Classification (CPC):
(C-Sets available)
**C08F 210/06**  (Cont.)

(86) International application number:
**PCT/EP2015/059919**

(87) International publication number:
**WO 2015/169831 (12.11.2015 Gazette 2015/45)**

(54) **RANDOM PROPYLENE-ETHYLENE COPOLYMERS AND PROCESS FOR THEIR PREPARATION**

ZUFALLS-PROPYLEN-ETHYLEN-COPOLYMERE UND HERSTELLUNGSVERFAHREN DAFÜR

COPOLYMÈRES DE PROPYLÈNE-ÉTHYLÈNE ALÉATOIRE ET LEUR PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2014 EP 14167178**

(43) Date of publication of application:
**15.03.2017 Bulletin 2017/11**

(73) Proprietor: **Basell Poliolefine Italia S.r.l.**
**20121 Milano (IT)**

(72) Inventors:
• **PIEMONTESI, Fabrizio**
**I-44122 Ferrara (IT)**
• **CATHELIN, Caroline**
**I-44122 Ferrara (IT)**
• **GUIDOTTI, Simona**
**I-44122 Ferrara (IT)**
• **LIGUORI, Dario**
**I-44122 Ferrara (IT)**
• **MORINI, Giampiero**
**I-44122 Ferrara (IT)**
• **TARTARI, Davide**
**I-44122 Ferrara (IT)**
• **VITALE, Gianni**
**I-44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A- 14 167 178**   **EP-A1- 0 728 769**
**EP-A1- 1 083 187**   **EP-A1- 1 095 951**
**EP-A1- 1 270 651**   **EP-A1- 1 903 070**
**EP-A1- 1 903 070**   **EP-A1- 1 940 888**
**EP-A1- 2 281 851**   **WO-A1-2004/033509**
**WO-A1-2004/055101**   **WO-A1-2005/095465**
**WO-A1-2006/120190**   **WO-A1-2013/016647**
**WO-A1-2015/169652**   **WO-A1-2015/169653**
**WO-A2-2006/065799**   **US-A- 4 251 407**
**US-A- 4 315 088**   **US-A- 4 816 433**
**US-A- 4 829 037**   **US-A- 6 057 413**
**US-A1- 2010 081 743**   **US-A1- 2011 031 645**
**US-B1- 6 365 685**   **US-B1- 6 420 021**
**US-B2- 6 737 171**   **US-B2- 7 001 965**

• **"Polypropylene Handbook", 1 January 1996, article ALBIZZATI E: "The Active Metal-Carbon Bond", pages: 56 - 58, XP055917039**
• **M. GAHLEITNER ET AL.: "Propylene-Ethylene Random Copolymers: Comonomer Effects on Crystallinity and Application Properties", JOURNAL OF APPLIED POLYMER SCIENCE, vol. 95, 2005, pages 1073 - 1081, XP055568807, DOI: 10.1002/app.21308**

EP 3 140 328 B2

**(Cont. next page)**

- " Ullmann's Encyclopedia of Industrial Chemistry", 1 January 2014, article GAHLEITNER MARKUS, ET AL: "Polypropylene", pages: 1 - 44, XP055917050
- "Polypropylene Handbook", 1 January 2005, article PASQUINI NELLO: "Metallocene Catalysis for Propylene polymerization", pages: 113 - 113, XP055839057
- "Handbook of Polypropylene and Polypropylene Composites", 1 January 2003, MARCEL DEKKER, article KISSEL WILLIAM J ET AL: "Polypropylene: Structure, Properties, Manufacturing Processes, and Applications", pages: 1 - 11, XP055706470
- ANONYMOUS: "Catalysts Business | Our Business TOHO TITANIUM", TOHO TITANIUM, 16 August 2021 (2021-08-16), pages 1 - 4, XP055839070, Retrieved from the Internet <URL:https://www.toho-titanium.co.jp/en/business/catalyst.html> [retrieved on 20210908]
- "Catalysts Business", webpage (accessed 16 08 2021)
- Handbook of Transition Metal Polymerization Catalysts, 2nd Edition(Ed. Hoff) 2018 chapter 9, pages 229 244-246 and 299
- Toho Blue Sky presentation
- Experimental report
- Gupta, V.K. et al., "Studies on magnesium dichloride-2,2-dimethoxypropane - titanium tetrachloride catalyst system for propylene polymerization"Polymer, Vol. 37, No. 8, 1996, pp 1399-1403

- Pasquini, Nello et al., "Polypropylene Handbook"Carl Hanser Verlag, 2005, Ed. 2nd, pp 40-44
- Malpass, Dennis B. et al., "Introduction to Industrial Polypropylene"Scrivener Publishing LLC, 2012, p 34
- bulk-pp-processes
- Pasquini, Nello et al., "Polypropylene Handbook"Carl Hanser Verlag, 2005, Ed. 2nd particular relevance: pages 18, 312 and 313
- Declaration - Markus Gahleitner
- Declaration - Cornelia Tranninger
- International Standard ISO 16152 First edition
- Experimental Report from Jonathan Reeds of 13.8.2023
- International Standard ISO 16152 Second edition

(52) Cooperative Patent Classification (CPC): (Cont.)

C-Sets
**C08F 210/06, C08F 4/6465;**
**C08F 210/06, C08F 4/6574;**
C08F 210/06, C08F 210/16, C08F 2500/04, C08F 2500/12, C08F 2500/15, C08F 2500/26

**Description**

FIELD OF THE INVENTION

The present disclosure relates to propylene/ethylene copolymers which have excellent properties in terms of low content of xylene-solubles and melting temperature. Moreover, the disclosure also relates to a process for the preparation of said copolymers of propylene with ethylene and optionally additional α-olefins.

BACKGROUND OF THE INVENTION

Propylene copolymers containing from 0.1 to 10 by weight of ethylene and/or another alpha-olefin, in which the comonomer is randomly distributed in the polypropylene chain, are generally known as random propylene copolymers. Compared with propylene homopolymers, the said copolymers have a molecular structure which is modified by the presence of the comonomer, leading to a substantially lower degree of crystallinity therein. As a result, random copolymers have a lower melting temperature with respect to propylene homopolymers and also lower sealing temperature and a modulus of elasticity.

Lowering the total polymer crystallinity leads to a more homogenous structure in which the variation of refraction index among the various polymer portions is minimized. For this reason the transparency of articles obtained from random copolymers is increased with respect to that of the corresponding propylene homopolymers.

These above described characteristics make the said copolymers particularly useful in the preparation of films or articles in which improved haze, impact resistance and low sealing initiation temperatures (S.I.T.) are required.

As a downside, the introduction of the comonomer into the polypropylene chain leads to a significant increase in the fraction of polymer which is soluble in xylene at 25°C, the said soluble polymer being mainly composed of lower molecular weight chains containing percentages of comonomer which are higher than the average content of comonomer calculated on the basis of the whole polymer. The amount of soluble fraction generally increases as the average content of comonomer in the copolymer increases and, beyond defined limits, precludes the use of the copolymers in certain sectors, for example in the preparation of films for wrapping food, unless recourse is made to a burdensome stage of elimination of the soluble fraction. The presence of relevant amounts of the said fractions decreases the flowability of the polymer granules, thereby making operations such as discharging and transferring the polymer difficult and giving rise to operation problems in the polymerization plant. Moreover, the presence of the said soluble fractions in significant amounts leads, over the time, to phenomena of deterioration of the optical properties owed to migration of these fractions to the surface (blooming).

It is therefore necessary to have available a catalyst endowed with a tendency to produce low levels of soluble fractions and which, at the same time, is capable of distributing the comonomer satisfactorily in the polypropylene chain so as to obtain the desired effect with the as low as possible content of comonomer. Moreover, the said catalyst should possess an activity such that it produces a copolymer which has very low levels of catalytic residues (Ti < 15 ppm), so as to make a further removal stage unnecessary.

It is very well known in the art that random propylene copolymers with improved comonomer distribution are obtainable using single-site catalysts such as those described in EP-A-318,049 and WO03/040201. These catalysts are capable of giving, in high yields, random propylene copolymers having a low content of xylene-solubles, very low melting temperature and improved optics. However, the copolymers obtained from single site catalysts have typically a very narrow molecular weight distribution which makes them difficult to process using standard techniques and process apparatus which are designed to process polymers having much broader molecular weight distribution such as those produced with the heterogeneous ZN catalysts. Moreover, the molecular weight of the said copolymers is typically low (expressed by high values of Melt Flow Index) and not suitable for certain applications.

On the other hand, the titanium based heterogenous Z/N catalysts generally do not have a good capability to randomly distribute the comonomer in and among the chains and therefore the quality of the random copolymers is not particularly high because for lowering the melting temperature to the target level the amount of comonomer needed makes the xylene soluble fraction undesirably high.

Some improvements have been described for example in US6,365,685 which relates to propylene random copolymers obtained by using a phthalate based catalyst in combination with certain 1,3-diethers as external donors. The random propylene polymers therein described are improved with respect to those obtained with the same phthalate-based ZN catalysts used in combination with silanes as external donor. However, the properties of the random copolymers still need to be improved particularly if considering that the xylene solubles content reported in the cited patent is determined by a method which comprises dissolving the whole sample at the xylene boiling point, lowering the temperature of the solution to 0°C and then let the temperature raise up to 25 °C.

This method normally detects, a lower amount of xylene soluble fraction with respect to the more commonly used method in which the xylene boiling solution is directly brought to 25°C without lowering it at 0°C. This latter method, being more challenging, is the most suitable to test the performances in terms of xylene soluble content.

SUMMARY OF THE INVENTION

Now it has surprisingly been found improved propylene/ethylene copolymers, obtained by heterogeneous catalysts, having very improved comonomer distribution which allows low sealing initiation temperature and better transparency.
The said propylene copolymers are characterized by the following features:

- ethylene content of between 0.1 and 5% by weight;
- molecular weight distribution (MWD), expressed in terms of Mw/Mn, greater than 3;
- Melt Flow Rate (MFR 230°C 2,16kg) referred to the copolymers as a reactor grade ranges from 0.2 to 45 g/10';
- absence of 2,1 propylene insertions;
- content of xylene soluble fraction (XS) and ethylene content (C2) such that the point defined by said values falls below the line given by the equation:

$$XS= 1.0296 \cdot e^{0.435C2}$$

where:

XS = % by weight of the fraction soluble in xylene at 25°C determined according to the method given in the characterization section but with the deviations set forth in the description;
C2 = % by weight of ethylene units in the copolymer determined via NMR according to the method given in the characterization section.

**DETAILED DESCRIPTION OF THE INVENTION**

In a specific embodiment the molecular weight distribution (MWD), expressed in terms of Mw/Mn, is greater than 3.5. In a particularly preferred embodiment it ranges from 3.5 to 5.5.
The ethylene content of the copolymers is especially between 1 and 5.0%wt.
The amount of catalytic residues is preferably less than 10 and more preferably less than 5 and especially less than 2 ppm of Ti.
Generally, the product of the comonomer reactivity ratio r1•r2 ranges from 1.5 and 3 and preferably from 1.8 to 3.
The Melt Flow Rate (MFR 230°C 2,16kg) referred to the copolymers as a reactor grade (i.e., copolymers that have not been subject to chemical or physical visbreaking) preferably ranges from 0.5 to 45 g/10' more preferably from 0.2 to 25.
Moreover, the copolymer herein disclosed can be characterized by one or more of the additional following features such as absence of 2,1 propylene insertions, and content of propylene units in form of isotactic triads (mm%) determined via C$^{13}$ NMR of higher than 98.3% and preferably higher than 98.5%
As shown in the specific examples, the optical characteristics of the random copolymers (in a non-nucleated form) is very good as evidenced by the haze value which is in general lower than 40 when determined on disk specimen 1mm thick. When the determination is carried out on film specimen of 50 $\mu$m the haze results to be lower than 0.30 and preferably lover than 0.25.
The Melting Temperature depends on the ethylene content but typically ranges from 125°C to 150°C preferably from 130 to 148°C. The SIT (Sealing Initiation Temperature) of the film obtained from the copolymer of the disclosure is also dependent from the comonomer content and may range from 105 to 130°C preferably from 110 to 128 °C and more preferably from 115 to 125°C. Moreover it has been observed that the difference between Melting Temperature and SIT for the copolymers of the disclosure is higher than 20°C preferably higher than 21°C which is an indication of a broad processability window.
The propylene copolymers herein disclosed can be prepared by a process comprising polymerizing propylene with ethylene, in the presence of a catalyst comprising the product of the reaction between:

(i) a solid catalyst component comprising Ti, Mg, Cl, and an electron donor compound characterized by the fact that it contains from 0.1 to 50%wt of Bi with respect to the total weight of said solid catalyst component;
(ii) an alkylaluminum compound and,
(iii) an electron-donor compound (external donor).

Preferably, in the catalyst component the content of Bi ranges from 0.5 to 40% more preferably from 1 to 35, especially from 2 to 25%wt and in a very particular embodiment from 2 to 20%wt.

The particles of solid component have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

In general the amount of Mg preferably ranges from 8 to 30% more preferably from 10 to 25%wt.

Generally, the amount of Ti ranges from 0.5 to 5% and more preferably from 0.7 to 3%wt.

Preferred internal electron donor compounds are selected from alkyl and aryl esters of optionally substituted aromatic polycarboxylic acids such as esters of benzoic and phthalic acids, Specific examples of such esters are n-butylphthalate, di-isobutylphthalate, di-n-octylphthalate, ethyl-benzoate and p-ethoxy ethyl-benzoate.

The Mg/Ti molar ratio is preferably equal to, or higher than, 13, preferably in the range 14-40, and more preferably from 15 to 40. Correspondingly, the Mg/donor molar ratio is preferably higher than 16 more preferably higher than 17 and usually ranging from 18 to 50.

The Bi atoms preferably derive from one or more Bi compounds not having Bi-carbon bonds. In particular the Bi compounds can be selected from Bi halides, Bi carbonate, Bi acetate, Bi nitrate, Bi oxide, Bi sulphate, Bi sulfide. Compounds in which Bi has the valence 3$^+$ are preferred. Among Bi halides, preferred are Bi trichloride and Bi tribromide. The most preferred Bi compound is $BiCl_3$.

The preparation of the solid catalyst component can be carried out according to several methods.

According to one method the solid catalyst component can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0°C); the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

Several ways are available to add one or more Bi compounds in the catalyst preparation. According to the preferred option, the Bi compound(s) is/are incorporated directly into the $MgCl_2 \cdot pROH$ adduct during its preparation. In particular, the Bi compound can be added at the initial stage of adduct preparation by mixing it together with $MgCl_2$ and the alcohol. Alternatively, it can be added to the molten adduct before the emulsification step. The amount of Bi introduced ranges from 0.1 to 1 mole per mole of Mg in the adduct. Preferred Bi compound(s) to be incorporated directly into the $MgCl_2 \cdot pROH$ adduct are Bi halides and in particular is $BiCl_3$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and is generally comprised between 50 and 2000.

One preferred class of external donors useful to prepare the copolymers of the present disclosure includes the silicon compounds of formula $(R_6)_a(R_7)_bSi(OR_8)_c$, where a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Particularly preferred silicon compounds are dicyclopentyldimethoxysilane (D donor) and methylcyclohexyldimethoxysilane (C donor), this latter to be used particularly in combination with a gas-phase polymerization technique.

The external electron donor compound (iii) is used in such an amount to give a molar ratio between the organoaluminum compound and said electron donor compound (iii) of from 0.1 to 500, preferably from 1 to 300 and more preferably from 3 to 100.

The polymerization process can be carried out according to known techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is may be carried out at temperature of from 20 to 120°C, preferably of from 40 to 90 and more preferably from 40 to 80°C. When the polymerization is carried out in gas-phase the operating pressure is generally between 0.5 and 10 MPa, preferably between 1 and 8 MPa. In the bulk polymerization the operating pressure is generally between 1 and 8 MPa, preferably between 1.5 and 5 MPa. Hydrogen is typically used as a molecular weight regulator.

According to a preferred embodiment, the propylene copolymers of the present disclosure can be prepared with a gas-phase polymerization process carried out in at least two interconnected polymerization zones. Said polymerization process is described in WO97/04015 and WO00/02929.

The process is carried out in a first and in a second interconnected polymerization zone to which propylene and ethylene or propylene and alphaolefins are fed in the presence of a catalyst system and from which the polymer produced is discharged. The growing polymer particles flow through the first of said polymerization zones (riser) under fast fluidization conditions, leave said first polymerization zone and enter the second of said polymerization zones (downcomer) through which they flow in a densified form under the action of gravity, leave said second polymerization zone and are reintroduced into said first polymerization zone, thus establishing a circulation of polymer between the two polymerization zones. Generally, the conditions of fast fluidization in the first polymerization zone is established by feeding the monomers gas mixture below the point of reintroduction of the growing polymer into said first polymerization zone. The velocity of the transport gas into the first polymerization zone is higher than the transport velocity under the operating conditions and is normally between 2 and 15 m/s. In the second polymerization zone, where the polymer flows in densified form under the action of gravity, high values of density of the solid are reached which approach the bulk density of the polymer; a positive gain in pressure can thus be obtained along the direction of flow, so that it becomes possible to reintroduce the polymer into the first reaction zone without the help of mechanical means. In this way, a "loop" circulation is set up, which is defined by the balance of pressures between the two polymerization zones and by the head loss introduced into the system. Optionally, one or more inert gases, such as nitrogen or an aliphatic hydrocarbon, are maintained in the polymerization zones, in such quantities that the sum of the partial pressures of the inert gases is preferably between 5 and 80% of the total pressure of the gases. The operating parameters such as, for example, the temperature are those that are usual in gas-phase olefin polymerization processes, for example between 50°C and 120°C. The process can be carried out under operating pressure of between 0,5 and 10 MPa, preferably between 1.5 and 6 MPa. Preferably, the various catalyst components are fed to the first polymerization zone, at any point of said first polymerization zone. However, they can also be fed at any point of the second polymerization zone. Molecular weight regulators known in the art, particularly hydrogen, can be used to regulate the molecular weight of the growing polymer.

The propylene copolymer used for the preparation of the films of the present invention may further comprise additives commonly employed in the polyolefin field, such as antioxidants, light stabilizers, nucleating agents, antiacids, colorants and fillers.

As explained, propylene-ethylene random copolymers of the present disclosure are characterized by a lower amount of xylene soluble fraction with respect to the propylene-ethylene random copolymers having the same ethylene content but generated with a catalyst not containing Bi. They are also characterized by a low melting temperature and medium molecular weight distribution which allows easy processability. As mentioned, random propylene copolymers having the characteristics described above, are particularly suitable for the preparation of low seal temperature and high clarity films particularly for use in the packaging field.

The following examples are given in order to better illustrate the disclosure and are not intended to limit it in any way.

EXAMPLES

**CHARACTERIZATIONS**

**Determination of Mg, Ti**

The determination of Mg and Ti content in the solid catalyst component has been carried out via inductively coupled plasma emission spectroscopy on "I.C.P Spectrometer ARL Accuris".

The sample was prepared by analytically weighting, in a "Fluxy" platinum crucible", $0.1 \div 0.3$ grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then analyzed via ICP at the following wavelengths: Magnesium, 279.08 nm; Titanium, 368.52 nm.

**Determination of Bi**

The determination of Bi content in the solid catalyst component has been carried out via inductively coupled plasma emission spectroscopy on "I.C.P Spectrometer ARL Accuris".

The sample was prepared by analytically weighting in a $200 \, cm^3$ volumetric flask $0.1 \div 0.3$ grams of catalyst. After slow addition of both ca. 10 milliliters of 65% v/v $HNO_3$ solution and ca. 50 $cm^3$ of distilled water, the sample undergoes a digestion for 4÷6 hours. Then the volumetric flask is diluted to the mark with deionized water. The resulting solution is directly analyzed via ICP at the following wavelength: Bismuth, 223.06 nm.

## Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

## Determination of X.I.

The Xylene Soluble fraction was measured according to ISO 16152, 2005, but with the following deviations (between brakets what prescribed by the ISO 16152)

> i- The solution volume is 250 ml (200 ml)
> ii- During the precipitation stage at 25°C for 30 min, the solution, for the final 10 minutes, is kept under agitation by a magnetic stirrer (30 min, without any stirring at all)
> iii-The final drying step is done under vacuum at 70°C (100 °C)

The content of said xylene-soluble fraction is expressed as a percentage of the original 2.5 grams and then, by difference (complementary to 100), the X.I. %

## Molecular weight distribution (Mw/Mn)

Molecular weights and molecular weight distribution were measured at 150°C using a Waters Alliance GPCV/2000 instrument equipped with four mixed-bed columns PLgel Olexis having a particle size of 13 $\mu$m. The dimensions of the columns were 300 × 7.8 mm. The mobile phase used was vacuum distilled 1,2,4-trichlorobenzene (TCB) and the flow rate was kept at 1.0 ml/min. The sample solution was prepared by heating the sample under stirring at 150°C in TCB for one to two hours. The concentration was 1 mg/ml. To prevent degradation, 0.1 g/l of 2,6-di-*tert*-butyl-*p*-cresol were added. 300 $\mu$l (nominal value) of solution were injected into the column set. A calibration curve was obtained using 10 polystyrene standard samples (EasiCal kit by Agilent) with molecular weights in the range from 580 to 7 500 000. It was assumed that the *K* values of the Mark-Houwink relationship were:

$$K = 1.21 \times 10^{-4} \text{ dl/g and } \alpha = 0.706 \text{ for the polystyrene standards,}$$

and a = 0.706 for the polystyrene standards,

$$K = 1.90 \times 10^{-4} \text{ dl/g and } \alpha = 0.725 \text{ for the experimental samples.}$$

and a = 0.725 for the experimental samples.

A third order polynomial fit was used for interpolate the experimental data and obtain the calibration curve. Data acquisition and processing was done by using Waters Empowers 3 Chromatography Data Software with GPC option.

## Melt flow rate (MIL)

The melt flow rate MIL of the polymer was determined according to ISO 1133 (230°C, 2.16 Kg).

## $^{13}$C NMR of propylene/ethylene copolymers

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethylaluminum chloride" M. Kakugo, Y. Naito, K. Mizunuma and T. Miyatake, Macromolecules, 1982, 15, 1150) using the following equations:

$$PPP = 100\, T_{\beta\beta}/S \quad PPE = 100\, T_{\beta\delta}/S \quad EPE = 100\, T_{\delta\delta}/S$$

$$PEP = 100\, S''_{\beta\beta}/S \quad PEE = 100\, S'_{\beta\delta}/S \quad EEE = 100\,(0.25\, 5_{\gamma\delta}+0.5\, S_{\delta\delta})/S$$

$$S = T_{\beta\beta} + T_{\beta\delta} + T_{\delta\delta} + S_{\beta\beta} + S_{\beta\delta} + 0.25\, S_{\gamma\delta} + 0.5\, S_{\delta\delta}$$

The molar percentage of ethylene content was evaluated using the following equation:

$$E\%\ mol = 100 * [PEP+PEE+EEE]'$$

The weight percentage of ethylene content was evaluated using the following equation:

$$E\%\ wt. = \frac{100 * E\%\ mol * MW_E}{E\%\ mol * MW_{E} + P\%\ mol * MW_P}$$

where P% mol is the molar percentage of propylene content, while $MW_E$ and $MW_P$ are the molecular weights of ethylene and propylene, respectively.

The product of reactivity ratio $r_1 r_2$ was calculated according to Carman (C.J. Carman, R.A. Harrington and C.E. Wilkes, Macromolecules, 1977; 10, 536) as:

$$r_1 r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP mmT$_{\beta\beta}$ (28.90-29.65 ppm) and the whole T$_{\beta\beta}$ (29.80-28.37 ppm)

**Determination of the regioinvertions:** determined by means of C$^{13}$-NMR according to the methodology described by J.C. Randall in "Polymer sequence determination Carbon 13 NMR method", Academic Press 1977. The content of regioinvertions is calculated on the basis of the relative concentration of $S_{\alpha\beta} + S_{\beta\beta}$ methylene sequences.

## Melting temperature via Differential Scanning Calorimetry (DSC)

The melting points of the polymers (Tm) were measured by Differential Scanning Calorimetry (D.S.C.) on a Perkin Elmer DSC-1 calorimeter, previously calibrated against indium melting points, and according to ISO 11357-1, 2009 and 11357-3, 2011, at 20°C/min. The weight of the samples in every DSC crucible was kept at 6.0 ± 0.5 mg.

In order to obtain the melting point, the weighted sample was sealed into aluminium pans and heated to 200°C at 20°C/minute. The sample was kept at 200°C for 2 minutes to allow a complete melting of all the crystallites, then cooled to 5°C at 20°C/minute. After standing 2 minutes at 5°C, the sample was heated for the second run time to 200°C at 20°C/min. In this second heating run, the peak temperature (Tp,m) was taken as the melting temperature.

## Determination of Haze on Disk specimen

Haze was measured on injection moulded circle plaque (disk), 1 mm thick, and 50 mm in diameter, by using a Gardner Hazemeter, model HazeGard Plus, according to ASTM D 1003-07.

The disk specimens were produced by using an injection moulding machine, BOY model XS, equipped with a screw of 16 mm diameter. The following moulding conditions were applied:

| | |
|---|---|
| Melt temperature | 230°C |
| Mould Temperature | 40°C |
| Screw RPM | 120 |
| Injection time | 1 s |
| Back pressure | 12 Bar |
| Total Cycle time | 30 s |
| Injection Pressure | Max possible without flashing (90-120Bar, depending on the sample) |
| Hold pressure | 15 bar less than the injection pressure (i.e. 75-105 Bar) |
| Hold time | 20 s |

## Seal Initiation Temperature (SIT)

### Preparation of the film specimens

Some films with a thickness of 50 $\mu$m are prepared by extruding each test composition in a single screw Collin extruder (length/diameter ratio of screw 1:25) at a film drawing speed of 7 m/min and a melt temperature do 210-250 °C. Each resulting film is superimposed on a 1000 $\mu$m thick film of a propylene homopolymer having a xylene insoluble fraction of 97 wt% and a MFR L of 2 g/10 min. The superimposed films are bonded to each other in a Carver press at 200°C under a 9000 kg load, which is maintained for 5 minutes. The resulting laminates are stretched longitudinally and transversally, i.e. biaxially, by a factor 6 with a TOM Long film stretcher at 150°C, thus obtaining a 20 $\mu$m thick film (18 $\mu$m homopolymer+2 $\mu$m test). 2x5 cm specimens are cut from the films.

### Determination of the SIT.

For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 5 seconds at a pressure of 0.1 N/mm$^2$. The sealing temperature is increased of 2°C for each seal, starting from about 10 °C less than the melting temperature of the test composition. The sealed samples are left to cool and then their unsealed ends are attached to an Instron machine where they are tested at a traction speed of 50 mm/min.

The SIT. is the minimum sealing temperature at which the seal does not break when a load of at least 2 Newtons is applied in the said test conditions.

### Determination of the Haze on film

50 $\mu$m film specimens prepared as described above for the SIT measure have been used. The haze value is measured using a Gardner photometric unit connected to a Hazemeter type UX-10 or an equivalent instrument having G.E. 1209 light source with filter "C". Reference samples of known haze are used for calibrating the instrument.

### Procedure for the preparation of the spherical adduct

Microspheroidal MgCl$_2$·$_p$C$_2$H$_5$OH adduct was prepared according to the method described in Comparative Example 5 of WO98/44009, with the difference that BiCl$_3$ in a powder form and in the amount indicated in Table 1 has been added before feeding of the oil.

### Procedure for the preparation of the solid catalyst component

Into a 500 ml round bottom flask, equipped with mechanical stirrer, cooler and thermometer 300 ml of TiCl$_4$ were introduced at room temperature under nitrogen atmosphere. After cooling to 0°C, while stirring, diisobutylphthalate and 9.0 g of the spherical adduct (prepared as described above) were sequentially added into the flask. The amount of charged internal donor was such to meet a Mg/donor molar ratio of 8. The temperature was raised to 100°C and maintained for 2 hours. Thereafter, stirring was stopped, the solid product was allowed to settle and the supernatant liquid was siphoned off at 100°C. After the supernatant was removed, additional fresh TiCl$_4$ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times in temperature gradient down to 60°C and one time at room temperature. The obtained solid was then dried under vacuum and analyzed.

**Propylene/Ethylene copolymerization Examples 1-6 and comparative Example 1**

A 4-liter steel autoclave equipped with a stirrer, pressure gauge, thermometer, catalyst feeding system, monomer feeding lines and thermostating jacket, was purged with nitrogen flow at 70°C for one hour. Then, at 30°C under propylene flow (0.5 bar), a suspension containing 75 ml of anhydrous hexane, 0.76 g of AlEt$_3$, 3.3 mmol of dicyclopentyldimethoxysilane (D donor), and 0.004 ÷ 0.010 g of solid catalyst component, previously precontacted for 5 minutes, was charged. The autoclave was closed; subsequently 3.2 NL of hydrogen was added to target the desired MIL, as reported in Table 1. Then, under stirring, 1.2 kg of liquid propylene together with the required amount of ethylene (4 g) was fed during the raising of temperature from 30 up to 70°C. The temperature was raised to 70°C in about 10-15 minutes and the polymerization was carried out at this temperature for two hours and ethylene was fed during the polymerization in order to keep the pressure constant. At the end of the polymerization, the non-reacted monomers were removed; the polymer was recovered and dried at 70°C under vacuum for three hours. Then the polymer was weighed and characterized. Experimental data related to propylene/ethylene copolymerizations are reported in Table 1. For all the copolymers produced the 2,1 regioinversion were absent.

**Comparative Example 2-3**

Propylene/Ethylene copolymer of Example 1 and 4 of US6,365,685 in which the XS has been determined according to the method given in the above characterization section.

**Examples 7-8 and Comparative example 4**

Prepolymerization treatment

Before introducing it into the polymerization reactors, the solid catalyst component prepared as described above, has been contacted with triethyl aluminum (TEAL) and methylcyclohexyldimethoxysilane (C donor) in a ratio reported on table 2. Then the resulting mixture was subjected to prepolymerization by maintaining it in suspension in liquid propylene at 20 °C for about 5 minutes before introducing it into the polymerization reactor.

Polymerization

Copolymer are prepared by polymerising propylene and ethylene in the presence of the formed catalyst under continuous conditions in a plant comprising a polymerisation apparatus as described in EP 1 012 195. The prepolymerized catalyst is sent to the polymerisation apparatus that comprises two interconnected cylindrical reactors, riser and downcomer. Fast fluidisation conditions are established in the riser by recycling gas (propane) from the gas-solid separator. No barrier feed has been used. The powder is continuously discharged and dried under a nitrogen flow. The main polymerization conditions are reported in Table 2. The characterization of the polymer is reported on table 4. For all the copolymers produced the 2,1 regioinversion were absent.

The comparative example was carried out according to the same procedure with the only difference that the catalyst component of comparative example 1 was used. The copolymers, additivated with Irgafos 168 (0.09%), Irganox 1010 (0.045%) and Calcium Stearate (0.04%), were extruded into 50μm film for the characterization.

**Table 1**

| | Support Synthesis | Polymerization and Characterization | | | | | | | |
|---|---|---|---|---|---|---|---|---|---|
| | Bi/Mg %mol | Mileage Copo tons/gTi | MIL g/10, | XS % wt. | C2 % wt. | Tm2 °C | Mw/Mn | % mm | Haze |
| Ex 1 | 2.0 | 5.5 | 1.9 | 3.7 | 3.2 | 143.1 | 5.1 | 98.8 | nd |
| Ex. 2 | 5.0 | 14.9 | 1.2 | 2.9 | 3.0 | 145.4 | 5.0 | 98.6 | 32.8 |
| Ex. 3 | 10.0 | 10.5 | 1.7 | 2.1 | 2.5 | 146.8 | | 99.0 | nd |

(continued)

|  | Support Synthesis | Polymerization and Characterization | | | | | | | |
|---|---|---|---|---|---|---|---|---|---|
|  | Bi/Mg %mol | Mileage Copo tons/gTi | MIL g/10, | XS % wt. | C2 % wt. | Tm2 °C | Mw/Mn | % mm | Haze |
| Ex. 4 | 15.0 | 11.3 | 1.3 | 1.6 | 2.2 | 146.6 | 4.7 | 98.9 | 35.5 |
| Ex. 5 | 25.0 | 11.4 | 1.4 | 3.9 | 3.2 | 141.4 |  | 98.7 | nd |
| Ex. 6 | 3.5 | 13.6 | 4.9 | 7.1 | 4.7 | 133.6 |  | 99.1 | 33.5 |
| Comp.1 | - | 3.7 | 3.4 | 5.0 | 3.0 | 143.3 | 5.4 | 98.1 | 41.1 |
| Comp 2 | - |  | 7.4 | 2.8 | 2.3 | 147.1 |  |  | nd |
| Comp 3 | - |  | 1.0 | 14 | 6.0 | 128.7 |  |  | nd |
| Nd= not determined | | | | | | | | | |

**Table 2**

| Example |  | Ex. 7 | Ex 8 | Comp. 4 |
|---|---|---|---|---|
| catalyst feed | g/h | 10 | 10 | 10 |
| catalyst/TEAL | g/g | 6 | 6 | 6 |
| TEAL/C donor | g/g | 5 | 3 | 3 |
| Polymerization temperature | °C | 75 | 70 | 70 |
| Pressure | Bar-g | 28 | 27 | 27 |
| $H_2/C_3^-$ | mol/mol | 0.019 | 0.031 | 0.029 |
| $C2^-/C2^-+C3^-$ | mol/mol | 0.023 | 0.028 | 0.028 |
| residence time | min | 66 | 79 | 80 |

**Table 3**

| Example |  | 7 | 8 | Comp. 4 |
|---|---|---|---|---|
| MFR | g/10' | 13.2 | 9.3 | 8.1 |
| C2 | % | 3.0 | 4.0 | 4.1 |
| XS | % | 3.2 | 5.2 | 8.5 |
| Mw/Mn |  | 4.1 | 4.4 | 4.3 |
| Tm | °C | 144.1 | 139.1 | 138.7 |
| Characterization CAST film 50 micron |  |  |  |  |
| Haze | % | 0.19 | 0.14 | 0.30 |
| SIT | °C | 123 | 118 | 121 |

## Claims

1. Propylene-ethylene copolymers **characterized by** the following features:

   - ethylene content of between 0.1 and 5% by weight;
   - molecular weight distribution (MWD), expressed in terms of Mw/Mn, greater than 3;
   - Melt Flow Rate (MFR 230°C 2,16kg) referred to the copolymers as a reactor grade ranges from 0.2 to 45 g/10';
   - absence of 2,1 propylene insertions;

- content of xylene soluble fraction (XS) and ethylene content (C2) such that the point defined by said values falls below the line given by the equation:

$$XS = 0.969 \cdot e^{0.435C2}$$

where:

XS = % by weight of the fraction soluble in xylene at 25°C measured according to ISO 16152, 2005, but with the deviations set forth in the description;
C2 = % by weight of ethylene units in the copolymer determined via NMR.

2. The propylene/ethylene copolymers according to claim 1 in which the ethylene content ranges from 1 and 5%wt.

3. Propylene-ethylene copolymer according to claim 1 in which molecular weight distribution (MWD), determined via Gel Permeation Chromatography is higher than 3.5.

4. Propylene-ethylene copolymer according to claim 1 in which the content of propylene units in form of isotactic triads (mm%) determined via $C^{13}$ NMR is higher than 98.3%.

5. Articles containing the propylene-ethylene copolymers according to anyone of the preceding claims.

6. Process for the preparation of the propylene-ethylene copolymers of claim 1 comprising polymerizing propylene with ethylene, in the presence of a catalyst comprising the product of the reaction between:

(i) a solid catalyst component comprising Ti, Mg, Cl, and an internal electron donor compound **characterized by** the fact that it contains from 0.1 to 50%wt of Bi with respect to the total weight of said solid catalyst component;
(ii) an alkylaluminum compound and,
(iii) an electron-donor compound (external donor).

7. Process according to claim 6 in which the external electron donor compound is selected from silicon compounds of formula $(R_6)_a(R_7)_b Si(OR_8)_c$, where a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group.

8. Process according to claim 7 in which the internal electron donor compound is selected from alkyl and aryl esters of optionally substituted aromatic polycarboxylic acids.

9. Process according to claim 8 in which the external electron donor compound is dicyclopentyldimethoxysilane.

10. Process according to any of claims 6-9 carried out in gas-phase in a reactor comprising at least two interconnected polymerization zones.

**Patentansprüche**

1. Propylen-Ethylen-Copolymere, **gekennzeichnet durch** die folgenden Merkmale:

- Ethylengehalt zwischen 0,1 und 5 Gew.-%;
- Molekulargewichtsverteilung (MWD), ausgedrückt als Mw/Mn, größer als 3;
- Schmelzindex (MFR 230°C 2,16 kg), bezogen auf die Copolymere als Reaktorqualität, im Bereich von 0,2 bis 45 g/10';
- Fehlen von 2,1-Propylen-Einlagerungen;
- Gehalt an xylollöslicher Fraktion (XS) und Ethylen (C2) derart, dass der durch diese Werte definierte Punkt unterhalb der durch die folgende Gleichung gegebenen Linie liegt:

$$XS = 0,969 \cdot e^{0,435C2}$$

wobei:

XS = Gew.-% der bei 25 °C in Xylol löslichen Fraktion, gemessen gemäß ISO 16152, 2005, jedoch mit den in der Beschreibung angegebenen Abweichungen;
C2 = Gew.-% der Ethyleneinheiten im Copolymer, bestimmt mittels NMR.

2. Propylen/Ethylen-Copolymere nach Anspruch 1, bei denen der Ethylengehalt im Bereich von 1 bis 5 Gew.-% liegt.

3. Propylen-Ethylen-Copolymer gemäß Anspruch 1, bei dem die mittels Gelpermeationschromatographie bestimmte Molekulargewichtsverteilung (MWD) größer als 3,5 ist.

4. Propylen-Ethylen-Copolymer gemäß Anspruch 1, bei dem der Gehalt an Propylen-Einheiten in Form von isotaktischen Triaden (mm%), bestimmt mittels $C^{13}$-NMR, höher als 98,3 % ist.

5. Gegenstände, die die Propylen-Ethylen-Copolymere gemäß einem der vorstehenden Ansprüche enthalten.

6. Verfahren zur Herstellung der Propylen-Ethylen-Copolymere nach Anspruch 1, umfassend das Polymerisieren von Propylen mit Ethylen in Gegenwart eines Katalysators, der das Produkt der Reaktion zwischen:

(i) einer festen Katalysatorkomponente, die Ti, Mg, Cl und eine interne Elektronendonorverbindung umfasst, **dadurch gekennzeichnet, dass** sie 0,1 bis 50 Gew.-% Bi, bezogen auf das Gesamtgewicht der festen Katalysatorkomponente, enthält;
(ii) einer Alkylaluminiumverbindung und
(iii) einer Elektronendonorverbindung (externer Donor).

7. Verfahren nach Anspruch 6, bei dem die externe Elektronendonorverbindung ausgewählt ist aus Siliziumverbindungen der Formel $(R_6)_a (R_7)_b Si(OR_8)_c$, wobei a 1 ist, b 1 ist, c 2 ist, mindestens einer der Reste $R_{(6)}$ und $R_7$ aus verzweigten Alkyl-, Cycloalkyl- oder Arylgruppen mit 3-10 Kohlenstoffatomen, die gegebenenfalls Heteroatome enthalten, ausgewählt ist und $R_8$ eine $C_1$-$C_{10}$-Alkylgruppe ist.

8. Verfahren nach Anspruch 7, wobei die interne Elektronendonorverbindung aus Alkyl- und Arylestern von gegebenenfalls substituierten aromatischen Polycarbonsäuren ausgewählt ist.

9. Verfahren nach Anspruch 8, wobei die externe Elektronendonorverbindung Dicyclopentyldimethoxysilan ist.

10. Verfahren nach einem der Ansprüche 6 bis 9, das in der Gasphase in einem Reaktor durchgeführt wird, der mindestens zwei miteinander verbundene Polymerisationszonen umfasst.

**Revendications**

1. Copolymères de propylène-éthylène **caractérisés par** les caractéristiques suivantes :

- teneur en éthylène comprise entre 0,1 et 5 % en poids ;
- distribution des poids moléculaires (MWD), exprimée en Mw/Mn, supérieure à 3 ;
- indice de fluidité à chaud (MFR 230°C 2,16 kg) par rapport aux copolymères en tant que qualité de réacteur, de 0,2 à 45 g/10';
- absence d'insertions 2,1 de propylène ;
- teneur en fraction soluble dans le xylène (XS) et la teneur en éthylène (C2) telles que le point défini par lesdites valeurs se situe sous la ligne donnée par l'équation :

$$\underline{XS = 0{,}969 \cdot e^{0{,}435C2}}$$

où :

XS = % en poids de la fraction soluble dans le xylène à 25 °C, mesurée selon la norme ISO 16152, 2005, mais avec les écarts indiqués dans la description ;
C2 = % en poids des motifs éthylène dans le copolymère, déterminé par RMN.

**2.** Copolymères de propylène/éthylène selon la revendication 1, dans lesquels la teneur en éthylène est comprise entre 1 et 5 % en poids.

**3.** Copolymère propylène-éthylène selon la revendication 1, dans lequel la distribution de masse moléculaire (MWD), déterminée par chromatographie par perméation de gel, est supérieure à 3,5.

**4.** Copolymère propylène-éthylène selon la revendication 1, dans lequel la teneur en motifs propylène sous forme de triades isotactiques (mm %), déterminée par RMN C$^{(13)}$ est supérieure à 98,3 %.

**5.** Articles contenant les copolymères de propylène-éthylène selon l'une quelconque des revendications précédentes.

**6.** Procédé de préparation des copolymères propylène-éthylène selon la revendication 1, comprenant la polymérisation du propylène avec l'éthylène, en présence d'un catalyseur comprenant le produit de la réaction entre :

(i) un composant catalyseur solide comprenant du Ti, du Mg, du Cl et un composé donneur d'électrons interne, **caractérisé par le fait qu'**il contient de 0,1 à 50 % en poids de Bi par rapport au poids total dudit composant catalyseur solide ;
(ii) un composé d'alkylaluminium et,
(iii) un composé donneur d'électrons (donneur externe).

**7.** Procédé selon la revendication 6, dans lequel le composé donneur d'électrons externe est choisi parmi les composés de silicium de formule $(R_6)_a (R_7)_b Si(OR_8)_c$, où a vaut 1, b vaut 1, c vaut 2, au moins l'un des groupes $R_6$ et $R_7$ est choisi parmi les groupes alkyle ramifiés, cycloalkyle ou aryle comportant 3 à 10 atomes de carbone, contenant éventuellement des hétéroatomes, et $R_8$ est un groupe alkyle en $C_1$ -$C_{10}$.

**8.** Procédé selon la revendication 7, dans lequel le composé donneur d'électrons interne est choisi parmi les esters alkyliques et aryliques d'acides polycarboxyliques aromatiques éventuellement substitués.

**9.** Procédé selon la revendication 8, dans lequel le composé donneur d'électrons externe est le dicyclopentyldiméthoxysilane.

**10.** Procédé selon l'une quelconque des revendications 6 à 9, mis en œuvre en phase gazeuse dans un réacteur comprenant au moins deux zones de polymérisation interconnectées.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 318049 A
- WO 03040201 A
- US 6365685 B
- US 4399054 A
- US 4469648 A
- WO 9704015 A
- WO 0002929 A
- WO 9844009 A
- EP 1012195 A

### Non-patent literature cited in the description

- **C. J. CARMAN ; R. A. HARRINGTON ; C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO ; Y. NAITO ; K. MIZUNUMA ; T. MIYATAKE**. Carbon-13 NMR determination of monomer sequence distribution in ethylene-propylene copolymers prepared with δ-titanium trichloride-diethylaluminum chloride. *Macromolecules*, 1982, vol. 15, 1150
- **C.J. CARMAN ; R.A. HARRINGTON ; C.E. WILKES**. *Macromolecules*, 1977, vol. 10, 536
- **J.C. RANDALL**. Polymer sequence determination Carbon 13 NMR method. Academic Press, 1977